# EUROPEAN PATENT SPECIFICATION

(11) **EP 1 610 998 B1**
(45) Date of publication and mention of the grant of the patent: **25.08.2010**
(21) Application number: 04725423.0
(22) Date of filing: 02.04.2004
(51) Int. Cl.: B62D 5/06, F16L 11/12

(54) **FLUID DISTURBANCE DAMPING IN FLUID DRIVEN ACTIVATION DEVICES.**
FLUIDSTÖRUNGSDÄMPFUNG IN FLUIDGETRIEBEN BETÄTIGUNGSVORRICHTUNGEN
ATTENUATION DES PERTURBATIONS FLUIDIQUES DANS DES DISPOSITIFS A ASSISTANCE HYDRAULIQUE

(30) Priority: 04.04.2003 GB 0307808
(43) Date of publication of application: 04.01.2006
(73) Proprietor: Eaton Fluid Power GmbH, 76532 Baden-Baden (DE)
(72) Inventor: HARTLE, Kevin John, Halesowen, West Midlands B63 4LS (GB)
(74) Representative: Leadbetter, Benedict
(86) International application number: PCT/GB2004/001424
(87) International publication number: WO 2004/088192

(56) References cited:
- WO-A-2004/040187
- DE-A- 3 510 267
- GB-A- 1 079 389
- GB-A- 2 265 959
- US-A- 4 285 534
- US-A- 6 076 557
- US-B1- 6 279 613

## Description

This invention relates to fluid driven actuation devices wherein fluid pumped at elevated pressure effects actuation, and in particular to the damping of fluid pressure disturbances which may manifest themselves as audible noise or tangible vibrations.

The invention is concerned particularly, but not exclusively, with hydraulic actuation devices for road vehicles, such as power steering arrangements.

An exemplary fluid driven actuation device as perceived by this specification may be summarised as comprising an actuator, such as a steering rack or like mechanism that provides gearing coupling road wheels to a steering wheel for driver manipulation, a fluid pump, a supply line for delivering fluid from the pump to the actuator at relatively high pressure and a fluid return line for delivering fluid from the actuator to the pump at relatively low pressure, said high and low pressures being relative to each other. The actuator also includes a valve or valves to control the flow of fluid in response to such manipulation to provide assistance to the driver's effort in operating the actuator. The fluid may typically be a hydraulic oil. The arrangement may also include some form of reservoir or equivalent storage for an excess of the fluid to ensure that the fluid circuit is kept filled and functional, accommodating changes in volume of the contained fluid due to thermal effects which occur relatively slowly with atmospheric conditions and the surrounding environment, such as the vehicle motor or engine.

However even with a fully filled fluid circuit, normal operation may create pressure disturbances within the fluid of sub-second duration and/or frequency. Fluid disturbance effects may be considered as falling into two general categories. A first fluid disturbance effect may be considered as relating to vehicle reliability insofar as disturbances may build to a resonance and/or impose stresses on components that could lead to premature component failure and/or loss of control of the vehicle. A second fluid disturbance effect may be considered as relating to nuisance insofar as the disturbance gives rise to noises and/or vibrations noticeable to the vehicle occupants. "Reliability" disturbances indiscernible by the occupants may thus not constitute a nuisance as such, just as "nuisance" disturbances may not affect the reliability of the vehicle. Notwithstanding the apparent inconsequential nature of "nuisance" disturbances, they are of significant importance to vehicle manufacturers insofar as they have profound effects on customer satisfaction with the product.

It will be appreciated that whether or not a physical disturbance effect is considered as noise or a vibration depends upon its frequency relationship to the physiologically defined senses of any occupant or user; in physical terms both are vibrations and are hereinafter considered as such except when specifically distinguished. Such variety of disturbances which affect, that is, are noticeable to, the occupants of motor vehicles are also often called by the collective term "noise, vibration, harshness" or its abbreviation "NVH".

In power steering arrangements, wherein the components are frequently mounted spaced apart, it is usual to include within the high pressure supply line between pump and actuator and within the low pressure return line between actuator and reservoir and/ or pump one or more flexible hoses each having a reinforced, possibly strongly elastic, wall that not only permits a hose to follow a path that may vary in installation and/or use but also provide some degree of noise isolation. The extent to which such hoses effectively or actively limit the propagation of NVH and other vibrations is disputable.

Conventionally, a tubular hose has a cross sectional shape in a plane perpendicular to the longitudinal axis that is circular for a number of reasons. As will be appreciated from basic geometry, for a closed shape bounded by a perimeter a circle is special in that it gives maximum enclosed area for minimum perimeter length. In the case of a tubular hose, such a circular cross section not only maximises the contents space for minimum wall materials, but also gives maximum wall strength against deformation arising from contained fluid pressure acting against the wall, such increase requiring the perimeter wall to be "stretched" circumferentially. The construction of such wall is typically a tubular body of a resiliently stretchable but fluid impervious elastomer and a reinforcement layer that imposes restraint against undue stretching. Such a wall structure that becomes tensioned to resist stretching also contributes to the wall's ability to propagate fluid pressure disturbances. That is, peripheral walls which resist being expanded by the internal fluid pressure, appear to pressure disturbances and fluctuations as quite rigid and relatively minor disturbances in pressure, at NVH frequencies, may be transmitted into and carried along or through the walls and to the awareness of occupants.

The peripheral wall is, of course, not absolutely rigid but slightly elastic as a strong spring and pressure disturbances of different frequency components and/or greater magnitude, such as imposed by external forces on the actuator, may exert sufficient force on the elastic peripheral wall to exchange some of the disturbance energy into deformation of the wall stored therein but released back into the fluid by the strong restoring force of the wall as it subsequently relaxes, possibly exacerbating them by setting up reflections and resonant standing waves within the fluid that may have both reliability and nuisance effects.

Thus the characteristics of a conventional reinforced flexible hose that makes it suitable for use in a fluid actuation device also contribute to, or at least fail to limit, its inability to effectively impede transmission or propagation of NVH nuisance and reliability vibrations arising from pressure disturbances in the contained fluid.

The problem of fluid pressure disturbances within actuation devices for vehicles has been addressed in a number of patent publications. For example, US 4285534 and DE 3809310 describe modified forms of flexible hoses which effect damping of pressure fluctuations in contained liquid of vehicle hydraulic systems. The former describes a hose for siting in the high pressure supply line leading from a supply pump of a hydraulic steering system to reduce noise resulting from cavitation effects arising within the pump. The hose structure is externally conventional, in terms of a peripheral wall which provides flexibility of its longitudinal axis and substantially fixed diameter in order to withstand high internal pressures without bulging and low internal pressures without collapsing, and the fluid space enclosed by the peripheral wall is divided longitudinally into a series of chambers interconnected by flow restrictions. DE 3809310 discloses a hose of similar external structure but the enclosed space contains, extending longitudinally from one end, a coaxial tube-like arrangement of helically wrapped strip whose turns are able to separate from or close up to each other to permit fluctuations in fluid pressure to follow various paths that damp out the fluctuations.

Whereas such hose-based devices may appear relatively simple, they may be as complex and unwieldy as discrete damping devices insofar as they include the creation of individual damping chambers and interconnecting passages or fluid paths that must be tuned to any particular range of frequencies it is intended to dampen. Consequently it is perceived as possibly necessary to provide different devices or different tuning to cater for different frequencies.

GB 1 079 389 on which the preamble of claim 1 is based describes pressure wave attenuators for vehicle power steering systems. However, the attenuators are based on circular section hose materials or on complex constructions which require tuning to the pressure wave frequencies being attenuated.

GB-A-2 265 959 describes a fuel supply tube having a non-circular cross-sectional shape but made from homogenous plastics material extrusion and having a surrounding sheath of, for example, foam rubber. Energy used in deforming the fuel tube is absorbed by deformation of the surrounding sheath material.

Although the above discussion has centred on the consideration of a fluid actuation device in the from of vehicle steering mechanism for which the fluid is a hydraulic liquid, with particular operational effects it is desired to mitigate, it will be appreciated that analogous fluid driven actuation devices for non-vehicular use and/or devices using gaseous driving fluid may suffer some or all of the outlined effects and benefit from an alternative approach to damping.

The present invention provides a fluid pressure disturbance damping arrangement of simple construction for a fluid driven actuation device including an actuator, a fluid pump, a fluid supply line for delivering fluid from the pump to the actuator at relatively high pressure and a fluid return line for delivering fluid from the actuator to the pump at relatively low pressure.

In accordance with the invention, a fluid driven actuation device including an actuator, a fluid pump, a fluid supply line for delivering fluid from the pump to the actuator at relatively high pressure, a fluid return line for delivering fluid from the actuator to the pump at relatively low pressure and a fluid pressure disturbance damping arrangement for such a fluid driven actuation device comprising an elongate flexible damping hose, in fluid communication with at least one of the supply and return lines, the hose having a longitudinal axis and about said axis a peripheral wall defining, in a cross-sectional plane perpendicular to the axis, an area of magnitude related to pressure exerted on the peripheral wall by contained fluid, said peripheral wall being responsive to impulsive or vibrating pressure disturbances in the contained fluid to deform and restore locally changing the shape of the cross-section area defined thereby to dissipate energy associated with the pressure disturbance in accordance with the characterising portion of the independent claims.

In this specification an impulsive or vibrational disturbance is considered to be one having a duration of about 0.2 seconds or less or a repetition period of about 0.2 seconds or less, and is intended to include those impulses and frequencies capable of perception by a user of the actuation device, as distinct from very slow changes due to thermal effects.

The peripheral wall is resilient insofar as it has a tendency to return to the shape from which internal pressure deforms it, but the restoring force of such resilience is significantly less than that experienced with wall stretching of a conventional hose. Such lesser resilience to deformation exhibited by the damping hose permits it to deform locally along its length to accommodate pressure disturbances of pulse or travelling wave without being restrained also by longitudinally adjacent portions of the wall.

In operation, the fluid pressure within part of the actuation device including the damping hose expands the hose from its natural state by deformation of the peripheral wall towards, but not reaching, definition of a circular cross-section without significant stretching, if any at all, of the material of the peripheral wall. The occurrence of fluid pressure disturbances, locally positive or negative pulsed or vibrational changes in pressure, effects local further deformation of the wall. Such deformation is against far less resilient restoring force than would be experienced by a conventional hose with less likelihood of deformation energy being stored in the wall and returned to the fluid without losses and so rapidly as to be substantially in phase with the disturbance Whilst the less resilient deformable wall of the damping hose may return some pressure disturbance energy to the contained fluid this may be likely to involve some delay that constitutes a damping phase shift and act to dissipate the disturbance.

The peripheral wall may be constructed with braided or analogously interwoven strands of filamentary material, providing reinforcement against stretching beyond a predetermined limit due to internal pressures, but which in deforming between non-circular shapes, results in relative movement between strands and frictional or lossy Coulomb damping. That is, energy from fluid pressure disturbances effecting deformation of the peripheral wall is absorbed by the wall deforming only to a minor extent returned into the fluid by restoration of the wall shape preventing the build up or propagation of noise and vibration.

Irrespectively of whether or not the peripheral wall has any ability to stretch, the natural shape assumed by the wall when looked at in a cross sectional plane perpendicular to its longitudinal axis and empty of fluid is a matter of choice provided it is not circular. Most conveniently, the hose has two opposing first wall parts normally closer together than two orthogonally disposed opposing second wall parts; that is, said first wall parts have minimum separation between them and said second wall parts have maximum separation between them. In the absence of fluid pressure, such opposing first wall parts may be naturally spaced apart giving a generally elliptical or oval cross section or the first wall parts may contact each other, leaving a small flow channel adj acent one or both of the second wall parts, but in each case the hose wall is responsive to internal fluid pressure to separate the first wall parts to increase the internal cross sectional area.

In a preferred construction of damping arrangement, for a predetermined length of damping hose the peripheral wall is of substantially fixed length about the longitudinal axis, that is, the wall material is not able to effect significant stretching and typically none, such as may be provided by a metal braiding. Such lack of ability to expand by stretching and tensioning the wall material is of course distinct from the ability of the wall to deform in shape to vary the cross sectional area at any position along its length in dependence upon the pressure differential across the wall.

Preferably the damping hose is of fixed length along the longitudinal axis such that expansion to greater cross sectional area is accommodated by peripheral wall deformation in a radial only direction and without any change in length.

The fluid actuation device may form part of a vehicle or other machine. Although principally concerned with NVH vibrations noticeable by a user of the actuation device, which user includes an occupant of a vehicle in which used, the damping arrangement may effect damping in respect of any pressure disturbances of the contained fluid.

The damping hose may be configured with said peripheral wall defining a non-circular cross section intermediate inflow and outflow ends, for disposing in-line with the fluid flow either in series with other line elements such that all of the flow passes therethrough, or in parallel with another line element. To ensure that the hose intermediate its ends is expanded by the contained fluid pressure, the fluid outflow end at least may be provided with a constriction. Alternatively, the damping hose may be configured for disposing other than in-line, as a spur or branch in fluid communication with the fluid circuit at one end and having a closed distal end in place of an outflow. The damping hose may be configured to be suitable for use in any part of such a said fluid driven actuation device, but preferably is arranged to be disposed coupled to the return line, and preferably adjacent the actuator when the actuator itself may constitute a source of pressure disturbances as well as a transmitter.

In a preferred embodiment, for use in a hydraulic actuation device comprising a vehicle steering rack or box having a casing mounted on the vehicle chassis the peripheral wall of the damping hose may be adapted for mounting in contact with, and supported by, the casing for substantially the full length of the hose.

The present invention also provides a fluid driven actuation device that includes an actuator, a fluid pump, a fluid supply line for delivering fluid from the pump to the actuator at relatively high pressure and a fluid return line for delivering fluid from the actuator to the pump at relatively low pressure and a fluid pressure disturbance damping arrangement as set forth above in fluid communication with at least one of the supply and return lines.

The fluid driven actuation device may comprise a hydraulic actuation device and in a preferred implementation a vehicle steering rack or box having a casing mounted on the vehicle chassis. The peripheral wall of the damping hose may be mounted in contact with, and supported by, the casing for substantially the full length of the hose. Preferably the damping hose is disposed coupled in fluid communication with the return line, preferably adjacent the actuator. The damping hose may be configured with said peripheral wall defining a non-circular cross section intermediate inflow and outflow ends therof and disposed in-line with the fluid flow in series with other line elements such that all of the flow passes therethrough, or in parallel with another line element. The fluid outlet end of the hose at least may be provided with a constriction. Alternatively, instead of being in line, the damping hose may be disposed as a spur or branch in fluid communication with the fluid circuit at one end and having a closed distal end in place of an outflow.

It is furthermore an object of the present invention to provide for a said fluid driven actuation device a method of damping disturbances within contained fluid, which method comprises providing in fluid communication with at least one of the supply and return lines, an elongate flexible damping hose having a longitudinal axis and about said axis a peripheral wall defining in a cross-sectional plane perpendicular to the axis a non-circular area of magnitude related to pressure exerted on the peripheral wall by contained fluid and causing said peripheral wall, in response to impulsive or vibrational pressure disturbances in the contained fluid, to deform and restore locally changing the shape of the cross section area defined thereby to dissipate energy associated with the pressure disturbance.

Embodiments of the invention will now be described by way of example in greater detail with reference to the attached figures, in which:
Figure 1 shows the general arrangement of a vehicle fluid power assisted steering system incorporating a fluid disturbance damping arrangement in accordance with a first embodiment of the present invention, wherein the damping arrangement is provided by a damping hose in the fluid return line;
Figure 2 is a cross section through a conventional hydraulic hose in a plane orthogonal to its longitudinal axis showing a circular area defined by its peripheral wall;
Figure 3 is a cross section through one form of damping hose in accordance with the invention wherein the peripheral wall defines an elliptical area;
Figure 4 is a cross section through an alternative form of damping hose in accordance with the invention wherein the peripheral wall is of a flat, so-called platypus form;
Figure 5 shows the general arrangement of a vehicle fluid power assisted steering system incorporating a fluid disturbance damping arrangement in accordance with a second embodiment of the present invention, wherein the damping arrangement is provided by a damping hose closed at one end and coupled at the other end to the fluid return line as a spur or stub; and
Figure 6 shows the general arrangement of a vehicle fluid power assisted steering system incorporating a fluid disturbance damping arrangement in accordance with a third embodiment of the present invention, wherein the damping arrangement is provided by a damping hose in parallel with part of the fluid return line.

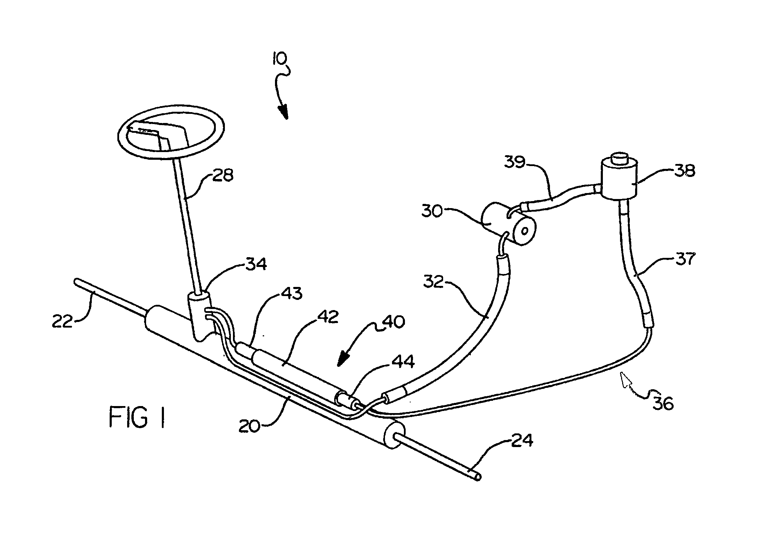

Figure 1 shows generally at 10 a fluid driven actuation device comprising a power assisted steering system of a road vehicle (not shown) in which it is mounted. In such power assisted steering system, fluid in the form of hydraulic oil under pressure is used to reduce the steering effort for the vehicle driver. The power assisted steering system comprises an actuator in the form of a rack 20 mounted on the body or chassis thereof coupled to the road wheels by track rods 22 and 24 and within casing 26 gearing (not shown) at a pressure determined by the turn angle of the steering wheel coupling the track rods to a steering wheel 28. These components comprise a mechanical circuit of the device.

The steering system also comprises a pump 30 driven by the vehicle prime mover (gasoline or diesel motor) or separate electric motor; the manner of driving power assisted pump for various systems within vehicles is well known and not described further. Output from the pump is taken by way of a supply line 32 to a steering gear valve 34 of the device mounted by the rack casing by which valve high pressure liquid is applied to a rack piston (not shown) to supplement force applied by the driver to the steering wheel. From the steering gear valve 34 a return line, which is shown generally at 36, returns the hydraulic liquid to the pump by way of a hose 37, reservoir 38 and so-called suction line 39 between the reservoir and pump. The components 30 to 39 comprise a hydraulic circuit of the device.

Insofar as the reservoir is typically at atmospheric pressure, then depending upon the flow of liquid around the system, the pump creates a pressure rise of from slightly below to significantly above atmospheric pressure and the fluid, in passing through the steering gear valve and rack actuator, suffers a pressure drop such that although the fluid leaving the rack is above atmospheric pressure, it is low in relation to the pump delivery pressure and further diminishes as a pressure gradient along the return line to the reservoir.

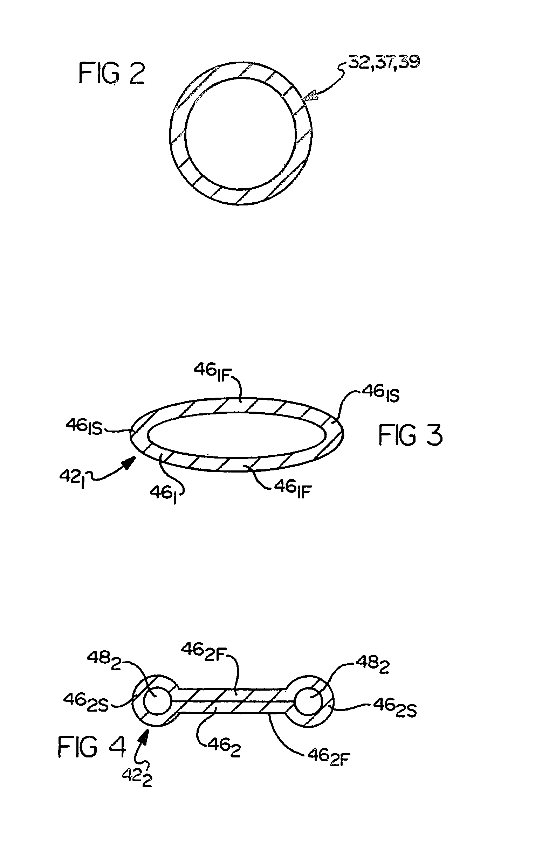

As thus far described the power assisted steering system is conventional insofar as the pump creates a high fluid pressure and each of the hoses 32, 37 and 39 is a reinforced hose of circular cross section, as shown in Figure 2, and flexible along its length, that is its longitudinal axis being flexible, but resisting changes in diameter (and cross sectional area) as a result of pressure differences across the peripheral wall.

The pump may create fluid disturbances in the form of high pressure peaks and other effects due to cavitation within the pump, which disturbances may emanate from the high pressure part of the hydraulic circuit and / or have influence on the actuator and return line parts. Furthermore, the steering gear valve 34 may be the source of mechanical noises and pressure disturbances within the fluid. As is well known, within the steering arrangement of a road vehicle the turning force needed from the steering wheel increases as a function of the increase in angle of the road wheels from the straight-ahead position; in supplying fluid power assistance from the hydraulic circuit this is effected by designing the steering gear valve with a so-called boost curve that provides little power assistance for large increments to small absolute turning angles but large gains in assistance for small incremental changes at large absolute angles. Such a large gain, and thus sensitivity to small changes, applies both to commanded inputs from the steering wheel and involuntary disturbances resulting from external shocks transmitted into the system from the road wheels. Insofar as the valve typically has internal components displaced in accordance with pressure differentials to define fluid flow orifices, it is possible at high gain for such internal components to succumb to oscillation or flutter, amplifying variations in fluid pressure and creating mechanical noise. It is also possible for such valve to create noise and flow disturbances due to passage of fluid through small orifices therein, and for such noise and flow disturbances to pass from the steering gear valve through the low pressure return line. Such noises derived from the steering gear valve are sometimes refer to as "rack rattle" and "grunt". Such disturbance tend to be at lower frequencies than pump cavitation noises in the high pressure line.

In accordance with a first embodiment of the invention there is provided a damping arrangement for fluid pressure disturbances within the steering system, being indicated generally at 40. The fluid pressure disturbance damping arrangement is coupled to, and in this embodiment located in, the return line of the hydraulic circuit adjacent the actuator so as to be close to the source of pressure disturbances arising therefrom.

The damping arrangement comprises an elongate flexible damping hose 42 disposed as close as is practicable to the steering gear valve 34 and for convenience, rather than necessity, carried by, and supported along its length by, the steering rack casing 26.

The damping hose 42 differs from the other hoses in that, intermediate an inflow end 43 and an outflow end 44 coupled to other pipes or hoses of the system, in the plane perpendicular to its longitudinal axis the peripheral wall defines a non-circular cross section both when empty and containing fluid at operational pressure, in this case the pressure within the return line adjacent the steering gear valve 34.

The hose has two opposing first wall parts normally closer together than two orthogonally disposed opposing second wall parts, so that in the absence of fluid pressure within the hose said first wall parts have minimum separation between them and said second wall parts have maximum separation between them and which separation is altered by fluid pressure to alter the cross sectional area defined thereby. The peripheral wall is resilient insofar as it returns to its original shape absent contained fluid pressure.

Figure 3 shows a first form of hose 42₁ having a peripheral wall 46₁ having opposing first wall parts 46_{1F} facing each other and opposing second wall parts 46_{1S} facing each other orthogonally disposed with respect to the parts 46_{1F} and, in the absence of fluid pressure, the peripheral wall tends to a shape defining an elliptical cross section.

The peripheral wall may be reinforced and have the ability to stretch or not as desired when subjected to contained fluid pressure, a pressure increase tending to separate the opposing first wall parts 46_{1F} and alter the cross section towards circular at which a particular peripheral wall length about the axis encloses maximum area. However, the wall stiffness and dimensions are chosen so that within an operational range of fluid pressures and anticipated disturbances thereto, the hose maintains a non-circular section.

Figure 4 shows a second form of damping hose 42₂ having a peripheral wall 46₂ having opposing first wall parts 46_{2F} facing each other and opposing second wall parts 46_{2S} facing each other orthogonally disposed with respect to the parts 46_{2F} and, in the absence of fluid pressure, the peripheral wall tends to a shape in which said first wall parts are arranged to contact each other. This form of hose is known as a platypus hose, so named because of its similarity in shape to the mouth parts of the animal of the same name. In this hose the construction of the walls can be of the same type of reinforced construction as the known hoses. Although the first wall parts tend to touch and eliminate fluid space from within the hose, adjacent the second wall parts small passageways 48₂ remain open to prevent complete occlusion of the hose and permitting any increase in contained fluid pressure to readily deform the wall separating the first wall parts and rapidly increase the cross sectional area of the fluid space with relatively little force and, unless desired, no unwanted tensioning or stretching of the wall.

The principal mechanism by which such hose forms 42₁ or 42₂ effect fluid pressure disturbance damping is the readiness with which their peripheral walls deform by bending in response to pressure fluctuations without having to stretch taut as strong springs as in the circular hose of Figure 2, thereby lessening the chance of such fluctuations being reflected back from the wall into the fluid or even conducted by a taut wall without at least some delay that contributes towards a phase shift that dissipates rather than reinforces the disturbance in the liquid. Also, lengthways of the hose, adjacent sections of wall are readily deformed relative to each other to interfere with the travelling of a local disturbance. However, further advantage may be seen if the hose wall is of the type reinforced with strands of metal or plastics material interwoven in a braided or like manner that may be moved relative to each other to provide bending flexibility of the hose longitudinal axis. Such peripheral wall reinforcement of a hose 42₁ or 42₂, in undertaking additional radial deformation to increase or decrease the cross sectional area, also undergoes frictional rubbing between the reinforcement strands consuming energy not available for return into the fluid upon relaxation of the wall, that is, absorbing the pressure disturbances and providing frictional, or Coulomb, damping

Thus it is found that simple forms of non-circular hose, in which operationally the peripheral wall deflects radially with respect to the longitudinal axis, are able to provide an effective damping of fluid pressure disturbances without complex internal structures or by precise specification of all dimensions.

There has been found some benefit in specifying at least some of the physical properties of the damping hose according to the nature and operating parameters of the fluid actuation system. For example, the length of the hose may be chosen so as to be most efficient at dissipating fluid pressure disturbances which predominate in a particular system or are considered to have the most undesirable effect either physically or in perception by a user. Although it is possible in principle to compute the ideal length for any particular disturbance duration or frequency characteristics, having regard to the characteristics of the various and interacting disturbances actually or potentially present in a particular vehicle and actuation device set-up therein, there are inevitably compromises to be made associated with the space available for such damping hose. It has been found preferable to adopt a heuristic approach for the particular vehicle and actuation device set-up to maximise damping for any disturbances considered particularly objectionable, such as the above mentioned rack-rattle, a trial and error approach being quickest and most cost effective. It is anticipated that a length of less than about 2000mm (78 inches) would be adequate for most purposes, although length is likely to be constrained to a lesser value by the surrounding structures of the vehicle. In that case, it is feasible to assemble two, and possibly more, such non-circular hoses in series, if necessary with direction changing elements between them. Within a specific passenger vehicle that has different configurations of engine, power steering etc, it has been found that suitable degree of damping can be achieved with one or more hoses having lengths of elliptical cross section in the range of about 150-350mm (6-15 inches) specific hoses, each with end regions of normal circular cross section of about 76mm (3 inches) long having overall length of about 242mm (9.5 inch) 303mm (12 inch) and 380mm (15 inch) are exemplary of the variety of lengths that may be employed according to circumstances.

The hose may have a nominal bore (at its end regions) of about 5/8 inch (15.875 mm) and the elliptical section have a minor axis diameter of about 19/32 inch (15.2 mm) and major axis diameter of about 31mm (17/32 inch) the dimensions of the elliptical section being slightly less than 1x and 2x the nominal (circular) bore respectively, whereby redefining the cross-sectional shape by internal pressure does not take the wall to a circular cross sectional shape, beyond which any increase in enclosed area would require stretching of the peripheral wall. A hose having scaled down dimensions, such as based on a 9.5mm (3/8 inch) nominal (circular) bore may be employed with satisfactory results where dimensional constraints dictate.

For a typical power steering set up the fluid may be pumped to a pressure in the range of about 70-80 Bar (1015 - 1160 psi) at optimum viscosity, that is, at optimum operating temperature, the pressure in the fluid circuit at the return side of the steering gear valve typically being positive but not significantly in excess of about 5 Bar (72.5 psi). The viscosity throughout may be significantly increased at low ambient temperatures and temporarily at start-up so that the hose must be able to deal with significantly higher pressures than may be expected to occur within nominal operating conditions. A suitable hose has a peripheral wall thickness of about 4mm (5/32 inch) and a suitably high burst pressure of about 41 Bar (595 psi) which greatly exceeds the operating pressure and accommodates wide variations in fluid viscosity.

Although for the actuation device of Figure 1 it is convenient for the damping hose to be disposed in the hydraulic circuit in line with the other fluid elements in the return line, it is possible for such damping hose to be employed differently.

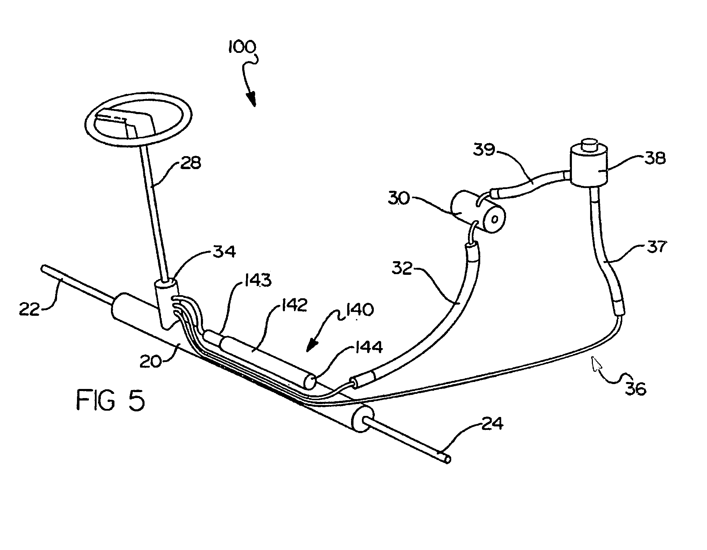

Referring to Figure 5, a second embodiment of actuation device 100 comprises the same components as Figure 1 except that the in-line damping arrangement 40 is replaced by a damping arrangement 140 in the form of a spur or stub hose 142 of the same construction 42₁ or 42₂ but coupled only at one end 143 thereof to the return line adjacent the steering gear valve and closed at the other, distal end 144. The damping hose 142 shares a contained fluid pressure found in the return line downstream of the steering gear valve and in operation partially expands its cross sectional area, pressure disturbances within the return line extending to the spur fluid causing the peripheral wall to deform so as to dissipate them as described above. Such a spur hose is simple in structure that makes it cost effective in manufacture and use, by its flexible elongate nature being configurable to occupy a variety of available spaces, including extending along, and being supported by, the rack casing in the same manner as hose 42.

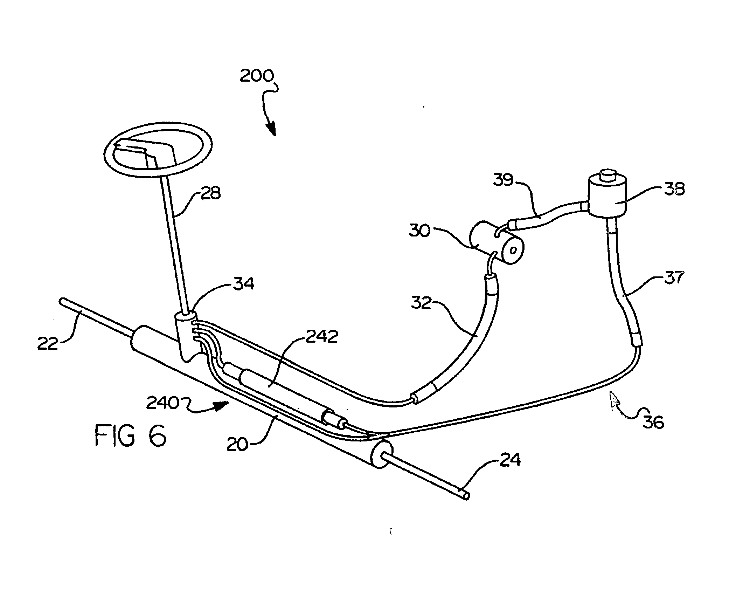

Referring to Figure 6, a third embodiment of actuation device 200 comprises the same components as Figure 1 except that damping arrangement 240 comprises, in place of damping hose 42 in series with return hose or pipe 37, a damping hose 242 of similar construction in parallel with, or shunting, a part of the conventional return line.

Even if the damping hose is optimised for NVH vibrations it still has an effect on analogous vibrations that may not be discernible NVH or nuisance, although the actuation device may include other sensors and / or components to recognise and respond to the so-called reliability disturbances.

Although the damping arrangement has been described in relation to optimally dissipating disturbances associated with the actuator, being coupled to the return line proximate thereto, and receiving fluid at the highest pressure to be found in the return line, it may be disposed elsewhere in the return line, and to ensure that the damping hose is subjected in operation to a contained fluid pressure that partially deforms the peripheral wall to the extent that it can then respond to superimposed pressure disturbances, the hose may be provided at its downstream end with a constriction. Furthermore, it is clear that it would also be possible to incorporate the above described hose forms in the high pressure supply line of the hydraulic circuit, interposed between the pump and actuator (steering gear valve), although steps would need to be taken to ensure that the performance of the actuator is not degraded, provision being needed to ensure that the flexibility of the hose wall is related to the high operational pressure expected within at all times such that the wall is not deformed to the maximum extent into a circular cross section whilst not being so stiff and resistant to deformation as to fail to accommodate and effect damping to undesirable and possibly small magnitude disturbances.

The steering system 10 of Figure 1 is exemplary as regards its mechanical and hydraulic circuit. Mechanically the described rack may be replaced by a steering box. Furthermore, the hydraulic circuit is one in which a partially filled reservoir defines an atmospheric pressure datum and permits thermal expansion and contraction of the liquid that may typically occur with a diurnal cycle. It will be appreciated that the above described disturbance damping arrangements may be employed in a so-called reservoir-less system wherein the hydraulic circuit is sealed from the atmosphere and includes in the lowest pressure part of the circuit a flexibly walled container that varies its volume to accommodate expansion and contraction of the enclosed liquid volume without changing the pressure across its wall.

Although it is convenient to employ a damping hose of the elliptical or platypus type it will be appreciated that any hose having a flexible peripheral wall defining a regular on non-regular non-circular cross section may be employed, but possibly not as efficiently; for example a hose having a substantially square, rectangular or other polygonal cross section would be able to deform to increase the enclosed cross sectional area without becoming circular and relying solely upon stretching of the wall material.

Furthermore, whatever the form of actuation device, it may in general be arranged to operate with a gaseous rather than liquid fluid in a pneumatic circuit and the damping hose constructed accordingly.

It should be understood by those skilled in the art that various alternatives to the embodiments of the invention described herein may be employed in practicing the invention without departing from the scope of the invention as defined by the following claims.

## Claims

1. A fluid driven actuation device (10; 110; 210) including an actuator (20), a fluid pump (30), a fluid supply line (32) for delivering fluid from the pump to the actuator at relatively high pressure, a fluid return line (36) for delivering fluid from the actuator to the pump at relatively low pressure, and a pressure disturbance damping arrangement (40; 140; 240) comprising, in fluid communication with at least one of the supply and return lines, an elongated flexible damping hose (42; 142; 242) having a longitudinal axis and about said axis a peripheral wall (46₁; 46₂) defining in a cross-sectional plane perpendicular to the axis an area of magnitude related to a pressure exerted on the peripheral wall by contained fluid, said peripheral wall being operable in response to impulsive or vibrational pressure disturbances in the contained fluid to deform and restore locally changing the shape of the cross-section area defined thereby to dissipate energy associated with the pressure disturbance, the fluid driven actuation device being **characterised in that** the area of magnitude is non-circular and said peripheral wall of said hose has a substantially fixed length in the cross-sectional plane perpendicular to the axis thereof under said impulsive or vibrational pressure disturbances, and **in that**
said hose has a wall construction including interwoven strands configured to be displaced relative to each other during deformation of the cross-sectional shape between non-circular shapes of the hose and to absorb deformation energy as frictional loss between the strands.

2. A fluid driven actuation device according to claim 1, wherein the damping hose (42; 242) is located in the return line (32) adjacent the actuator, providing a passage for return of the fluid from the actuator to the pump.

3. A fluid driven actuation device according to claim 1 or claim 2, wherein the damping hose of the pressure disturbance damping means is of fixed length.

4. A fluid driven actuation device according to claim 3, wherein the damping hose is supported along its length by the actuator.

5. A fluid driven actuation device according to any one of claims 1 to 4, wherein the peripheral wall (46₁; 46₂) of said damping hose is arranged to change shape in response to contained fluid pressure disturbances without storing the disturbance energy solely as elastic stretching the peripheral wall.

6. A fluid driven actuation device according to any one of claims 1 to 5, wherein the hose has two opposing first walls parts (46_{1F}; 46_{2F}) normally closer together than two orthogonally disposed opposing second wall parts (46_{1S}; 46_{2S}).

7. A fluid driven actuation device according to claim 6, wherein in the absence of fluid pressure the peripheral wall (46₁) tends to a shape defining an elliptical cross-section.

8. A fluid driven actuation device according to any one of claims 1 to 7, wherein in the absence of fluid pressure said first wall parts (46_{2F}) are arranged to contact each other.

9. A fluid driven actuation device according to claim 1, wherein the actuator includes a power assisted steering mechanism for a road vehicle.

10. A power steering arrangement for a road vehicle wherein the actuator comprises a steering rack or box having a casing mounted on the vehicle, said power steering arrangement comprising a fluid driven actuation device according to claim 1.

11. A power steering arrangement according to claim 10, wherein the drive fluid is a hydraulic fluid and the damping hose is in the return line.

12. A power steering arrangement according to claim 10, wherein the damping hose has its peripheral wall in contact with the casing of the steering rack or box for substantially the whole length of the hose.

13. A method of damping disturbances in fluid pressure within a fluid driven actuation device (10; 110; 210) including an actuator (20), a fluid pump (30), a fluid supply line (32) for delivering fluid from the pump to the actuator at relatively high pressure, a fluid return line (36) for delivering fluid from the actuator to the pump at relatively low pressure, the method comprising coupling to at least one of the supply and return lines, an elongated flexible damping hose (42; 142; 242) having a longitudinal axis and about said axis a peripheral wall (46₁; 46₂) defining in a cross-sectional plane perpendicular to the axis an area of magnitude related to pressure exerted on the peripheral wall by contained fluid, and causing said peripheral wall to deform and restore locally in response to impulsive or vibrational pressure disturbances in the contained fluid changing the shape of the cross-section area defined thereby dissipating energy associated with the pressure disturbance, the method being **characterised by** providing said area of magnitude with a non-circular cross-section and providing said peripheral wall of said hose with a substantially fixed length in the cross-sectional plane perpendicular to the axis thereof under said impulsive or vibrational pressure disturbances, and by providing said hose with a wall construction including interwoven strands configured to be displaced relative to each other during deformation of the cross-sectional shape of the hose and to absorb deformation energy as frictional loss between the strands.

14. A method according to claim 13 comprising inserting the damping hose (42; 142; 242) in the actuation device return line adjacent the actuator (20).

15. A method according to claim 13 or claim 14 comprising supporting the damping hose with its peripheral wall in contact with the casing of the actuator (20) for substantially the whole length of the hose.

## Patentansprüche

1. Fluidbetriebenes Auslösegerät (10; 110; 210), einschließlich eines Aktuators (20), einer Fluidpumpe (30), einer Fluid-Versorgungsleitung (32) zum Transportieren von Fluid von der Pumpe zum Aktuator bei relativ hohem Druck, einer Rückflußleitung (36) zum Transportieren von Fluid vom Aktuator zur Pumpe bei relativ niedrigem Druck und einer Druckstörung-Dämpfungseinrichtung (40; 140; 240), die in fluider Kommunikation mit wenigstens einer der Versorgungs- und Rückflußleitungen steht, einen verlängerten flexiblen Dämpfungsschlauch (42; 142; 242) umfasst, welcher über eine Längsachse und um besagte Achse über eine periphere Wand (46₁; 46₂) verfügt, welche auf einer Querschnittsfläche senkrecht zur Achse einen Größenbereich in Bezug auf den Druck, der auf die periphere Wand durch das enthaltene Fluid ausgeübt wird, definiert, die periphere Wand kann sich in Folge von Impuls- oder Schwingungs-Druckstörungen in dem enthaltenen Fluid verformen und wiederherstellen, wodurch die lokale Veränderung der Form der beschriebenen Querschnittsfläche bedingt ist, wodurch die Energie, die mit der Druckstörung assoziiert ist, abgeleitet wird, **dadurch gekennzeichnet, dass** der Größenbereich nicht kreisförmig ist, und dass besagte periphere Wand von besagtem Schlauch eine grundsätzlich fixe Länge in der Querschnittsfläche senkrecht zur Achse unter besagten Impuls- oder Schwingungs-Druckstörungen aufweist und dass der Schlauch eine Wandkonstruktion aufweist, welche miteinander verwobene Fasern enthält, die konfiguriert sind, um sich während der Deformierung der Querschnittsform zwischen nicht-kreisförmigen Formen des Schlauches relativ zu einander zu verlagern und um die Deformierungsenergie als Reibungsverlust zwischen den Fasern zu absorbieren.

2. Fluidbetriebenes Auslösegerät nach Anspruch 1, wobei der Dämpfungsschlauch (42; 242) sich in der Rückflußleitung (32) neben dem Aktuator befindet und einen Durchlauf für den Rückfluß des Fluids vom Aktuator zur Pumpe zur Verfügung stellt.

3. Fliudbetriebenes Auslösegerät nach Anspruch 1 oder Anspruch 2, wobei der Dämpfungsschlauch des Druckstörung-Dämpfungsmittels eine fixe Länge aufweist.

4. Fluidbetriebenes Auslösegerät nach Anspruch 3, wobei der Dämpfungsschlauch auf seiner ganzen Länge vom Aktuator unterstützt wird.

5. Fluidbetriebenes Auslösegerät nach Anspruch 1 bis 4, wobei die periphere Wand (46₁; 46₂) von besagtem Dämpfungsschlauch so arrangiert ist, um ihre Form in Bezug auf die enthaltenen Fluid-Druckstörungen zu ändern, ohne die Störungsenergie ausschließlich als elastisches Dehnen der peripheren Wand zu speichern.

6. Fluidbetriebenes Auslösegerät nach Anspruch 1 bis 5, wobei der Schlauch zwei gegenüberliegenden erste Wandteile (46_{1F;} 46_{2F}), normalerweise enger beieinander als zwei orthogonal gegenüberliegende zweite Wandteile (46_{1S}; 46_{2S}) aufweist.

7. Fluidbetriebenes Auslösegerät nach Anspruch 6, wobei die periphere Wand (46₁) in Ermangelung fluiden Druckes zu einer Form tendiert, die einen elliptischen Querschnitt definiert.

8. Fluidbetriebenes Auslösegerät nach Anspruch 1 bis 7, wobei in Ermangelung fluiden Druckes besagte erste Wandteile (46_{2F}) in Kontakt zueinander ausgerichtet sind.

9. Fluidbetriebenes Auslösegerät nach Anspruch 1, wobei der Aktuator eine Servolenkung für ein Straßenfahrzeug beinhaltet.

10. Servolenkung für ein Straßenfahrzeug, wobei der Aktuator ein Lenkungsgestell oder eine Lenkungsbox mit einem auf dem Fahrzeug montierten Gehäuse umfasst, wobei besagte Servolenkung nach Anspruch 1 ein fluidbetriebenes Auslösegerät beinhaltet.

11. Servolenkung nach Anspruch 10, wobei das Antriebsfluid ein hydraulisches Fluid ist, und der Dämpfungsschlauch sich in der Rückflußleitung befindet.

12. Servolenkung nach Anspruch 10, wobei sich die periphere Wand des Dämpfungsschlauchs in Kontakt mit dem Gehäuse des Lenkungsgestelles oder der Lenkungsbox grundsätzlich auf der ganzen Länge des Schlauches befindet.

13. Verfahren zum Dämpfen von Störungen des Fluiddrucks innerhalb eines fluidbetriebenen Auslösegeräts (10; 110; 210), einschließlich eines Aktuators (20), einer Fluidpumpe (30) einer Fluidkeits-Versorgungsleitung (32), um Fluidkeit von der Pumpe zum Aktuator bei relativ hohem Druck zu transportieren, einer Fluidkeits-Rückflußleitung (36) und um die Fluid vom Aktuator zur Pumpe bei relativ niedrigem Druck zu transportieren, wobei das Verfahren umfasst: den Anschluss an mindestens eine der Versorgungs- und Rückflußleitungen, einen verlängerten flexiblen Dämpfungsschlauch (42; 142; 242), welcher über eine Längsachse und um besagte Achse über eine periphere Wand (46₁; 46₂) verfügt, welche auf einer Querschnittsfläche senkrecht zur Achse einen Größenbereich in Bezug auf den Druck definiert, der auf die periphere Wand durch das enthaltene Fluid ausgeübt wird, was verursacht, dass besagte periphere Wand sich in Folge von Impuls- oder Schwingungs-Druckstörungen in dem enthaltenen Fluid verformen und wiederherstellen kann, wodurch die Veränderung der Form der beschriebenen Querschnittsfläche bedingt wird und die Energie, die mit der Druckstörung assoziiert ist, abgeleitet wird, **dadurch gekennzeichnet, dass** in dem Größenbereich eine nichtkreisförmige Querschnittsfläche zur bereitgestellt wird und dass die periphere Wand des Schlauchs eine im wesentlichen fixe Länge in der Querschnittsfläche senkrecht zur Achse unter besagten Inpuls- oder Schwingungs-Drucksstörungen aufweist, sowie dass der Schlauch mit einer Wandkonstruktion bereitgestellt wird, welche miteinander verwobene Fasern beinhaltet, die konfiguriert sind, um sich während der Deformierung der Querschnittsform des Schlauches relativ zu einander zu verlagern und um die Deformierungsenergie als Reibungsverlust zwischen den Fasern zu absorbieren.

14. Verfahren nach Anspruch 13, wobei ein Einlegen des Dämpfungsschlauches (42; 142; 242) in die Rückflußleitung des Auslösegeräts neben dem Aktuator (20) vorgesehen ist.

15. Verfahren nach Anspruch 13 oder 14, wobei eine Unterstützung des Dämpfungsschlauchs mit seiner peripheren Wand in Kontakt mit dem Gehäuse des Aktuators (20) auf grundsätzlich der ganzen Schlauchlänge vorgesehen ist.

## Revendications

1. Dispositif d'actionnement entraîné par un fluide (10; 110; 210) incluant un actionneur (20), une pompe à fluide (30), une conduite d'alimentation en fluide (32) pour fournir du fluide provenant de la pompe à l'actionneur à relativement haute pression, une conduite de retour de fluide (36) pour fournir du fluide provenant de l'actionneur à la pompe à relativement basse pression, et un agencement d'amortissement des troubles de la pression (40; 140; 240) comprenant, en communication fluidique avec au moins une des conduites d'alimentation et de retour, un tuyau d'amortissement flexible allongé (42; 142; 242) ayant un axe longitudinal et une paroi périphérique (46₁; 46₂) autour dudit axe définissant dans un plan en coupe transversale perpendiculaire à l'axe une zone de magnitude liée à une pression exercée sur la paroi périphérique par du fluide contenu, ladite paroi périphérique pouvant fonctionner en réponse à des troubles de la pression impulsifs ou vibratoires dans le fluide contenu pour déformer et restaurer en changeant localement la forme de la zone en coupe transversale définie pour dissiper de ce fait l'énergie associée au trouble de la pression, le dispositif d'actionnement entraîné par un fluide étant **caractérisé en ce que** la zone de magnitude est non circulaire et ladite paroi périphérique dudit tuyau possède une longueur essentiellement fixe dans le plan en coupe transversale perpendiculaire à l'axe de celui-ci dans le cadre desdits troubles de la pression impulsifs ou vibratoires, et **en ce que** ledit tuyau possède une construction de paroi incluant des brins entrelacés configurés pour être déplacés les uns par rapport aux autres au cours de la déformation de la forme en coupe transversale entre des formes non circulaires du tuyau et pour absorber l'énergie de déformation comme perte de friction entre les brins.

2. Dispositif d'actionnement entraîné par un fluide selon la revendication 1, dans lequel le tuyau d'amortissement (42; 242) est situé dans la conduite de retour (32) de manière adjacente à l'actionneur, fournissant un passage pour le retour du fluide de l'actionneur vers la pompe.

3. Dispositif d'actionnement entraîné par un fluide selon la revendication 1 ou la revendication 2, dans lequel le tuyau d'amortissement du moyen d'amortissement des troubles de la pression est de longueur fixe.

4. Dispositif d'actionnement entraîné par un fluide selon la revendication 3, dans lequel le tuyau d'amortissement est supporté le long de sa longueur par l'actionneur.

5. Dispositif d'actionnement entraîné par un fluide selon l'une quelconque des revendications 1 à 4, dans lequel la paroi périphérique (46₁; 46₂) dudit tuyau d'amortissement est agencée pour changer de forme en réponse à des troubles de la pression du fluide contenu sans stocker l'énergie des troubles uniquement comme élastique étirant la paroi périphérique.

6. Dispositif d'actionnement entraîné par un fluide selon l'une quelconque des revendications 1 à 5, dans lequel le tuyau possède deux premières parties de paroi opposées (46_{1F}; 46_{2F}) normalement plus proches l'une de l'autre que deux secondes parties de paroi opposées (46_{1S}; 46_{2S}) disposées orthogonalement.

7. Dispositif d'actionnement entraîné par un fluide selon la revendication 6, dans lequel la paroi périphérique (46₁) tend vers une forme définissant une section transversale elliptique en l'absence de pression de fluide.

8. Dispositif d'actionnement entraîné par un fluide selon l'une quelconque des revendications 1 à 7, dans lequel lesdites premières parties de paroi (46_{2F}) sont agencées pour venir en contact l'une avec l'autre en l'absence de pression de fluide.

9. Dispositif d'actionnement entraîné par un fluide selon la revendication 1, dans lequel l'actionneur inclut un mécanisme de direction assistée pour un véhicule routier.

10. Agencement de direction assistée pour un véhicule routier, dans lequel l'actionneur comprend une crémaillère ou un boîtier de direction ayant un corps monté sur le véhicule, ledit agencement de direction assistée comprenant un dispositif d'actionnement entraîné par un fluide selon la revendication 1.

11. Agencement de direction assistée selon la revendication 10, dans lequel le fluide d'entraînement est un fluide hydraulique et le tuyau d'amortissement est dans la conduite de retour.

12. Agencement de direction assistée selon la revendication 10, dans lequel le tuyau d'amortissement a sa paroi périphérique en contact avec le corps de la crémaillère ou du boîtier de direction sur essentiellement l'ensemble de la longueur du tuyau.

13. Procédé d'amortissement des troubles dans la pression de fluide au sein d'un dispositif d'actionnement entraîné par un fluide (10; 110; 210) incluant un actionneur (20), une pompe à fluide (30), une conduite d'alimentation en fluide (32) pour fournir du fluide provenant de la pompe à l'actionneur à relativement haute pression, une conduite de retour de fluide (36) pour fournir du fluide provenant de l'actionneur à la pompe à relativement basse pression, le procédé comprenant l'accouplement à au moins une des conduites d'alimentation et de retour, un tuyau d'amortissement flexible allongé (42; 142; 242) ayant un axe longitudinal et une paroi périphérique (46₁; 46₂) autour dudit axe définissant dans un plan en coupe transversale perpendiculaire à l'axe une zone de magnitude liée à une pression exercée sur la paroi périphérique par du fluide contenu, et provoquant la déformation et la restauration locale par ladite paroi périphérique en réponse à des troubles de la pression impulsifs ou vibratoires dans le fluide contenu en changeant la forme de la zone en coupe transversale définie, dissipant de ce fait l'énergie associée au trouble de la pression, le procédé étant **caractérisé par** le fait de prévoir ladite zone de magnitude avec une section transversale non circulaire et de prévoir ladite paroi périphérique dudit tuyau avec une longueur essentiellement fixe dans le plan en coupe transversale perpendiculaire à l'axe de celui-ci dans le cadre desdits troubles de la pression impulsifs ou vibratoires, et par le fait de prévoir ledit tuyau avec une construction de paroi incluant des brins entrelacés configurés pour être déplacés les uns par rapport aux autres au cours de la déformation de la forme en coupe transversale du tuyau et pour absorber l'énergie de déformation comme perte de friction entre les brins.

14. Procédé selon la revendication 13, comprenant l'insertion du tuyau d'amortissement (42; 142; 242) dans la conduite de retour du dispositif d'actionnement de manière adjacente à l'actionneur (20).

15. Procédé selon la revendication 13 ou la revendication 14, comprenant le support du tuyau d'amortissement avec sa paroi périphérique en contact avec le corps de l'actionneur (20) sur essentiellement l'ensemble de la longueur du tuyau.
